# EUROPEAN PATENT APPLICATION

(11) **EP 1 375 335 A2**
(43) Date of publication of application: **02.01.2004**
(21) Application number: 03013264.1
(22) Date of filing: 12.06.2003
(51) Int. Cl.: B62M 27/02

(54) **Snowmobile comprising a steering system**

(30) Priority: 20.06.2002 JP 2002180631
(71) Applicant: YAMAHA HATSUDOKI KABUSHIKI KAISHA, Iwata-shi Shizuoka-ken (JP)
(72) Inventor: Takahiko, Kubota, Iwata-Shi, Shizuoka-ken (JP); Haruna, Kaoru, Iwata-Shi, Shizuoka-ken (JP)
(74) Representative: Grünecker, Kinkeldey, Stockmair & Schwanhäusser Anwaltssozietät

(57) **Abstract**

To make steering easily accomplishable while excellently maintaining steering stability of a snowmobile, a snowmobile 1 is proposed being disposed with steering skis 4, being rotatable around pivot support axial centers 21 extending in a width direction of the vehicle body 2. Each steering ski 4 is disposed with a runner 28 that extends in the longitudinal direction of the ski body 25. A protrusion 34, which projects downward from a lower end side of portions of each ski body 25 distanced frontward or rearward from the pivot support axial center 21, is glidable on a snow surface S.

## Description

The present invention relates to a snowmobile comprising a steering ski system including at least one steering ski being disposed below a front portion of a vehicle body rotatable about a pivot support axial center.

Therein, the steering skis are steerably supported at a front portion of a vehicle body and glidable on a snow surface. Among such snowmobiles having steering ski systems, there has conventionally been the system described in JP-A-2000-289684.

According to the system of the above-described publication, a snowmobile is disposed with a drive device that is supported at a rear portion of a vehicle body and causes the vehicle body to be able to be driven forward, steering skis that are disposed below a front portion of a vehicle body and extend in a longitudinal direction of the vehicle body, steering knuckles that project downward from a front portion of the vehicle body, with projecting end portions of the steering knuckles pivotally supporting longitudinal-direction middle portions of the steering skis so that the steering skis are rotatable around a pivot support axial center extending in a width direction of the vehicle body, and a steering handle that is supported at the vehicle body and coupled so as to mutually interlock with the steering skis via the steering knuckles.

Each steering ski is disposed with a ski body that is pivotally supported at the steering knuckle and a runner that is attached to an undersurface of the ski body. Each runner is disposed at a width-direction center portions in the undersurface of the ski body and extends in the longitudinal direction of the ski body, and an undersurface of each runner in the longitudinal direction of the steering skis is positioned below the undersurface of each ski body.

When the snowmobile is disposed on a snow surface, an undersurface of the drive device contacts the snow surface so as to bite into the snow surface due to the weight of the vehicle body and the like, the steering skis glidably contact the snow and, in this state, the snowmobile is supported on the snow surface.

When a rider riding the snowmobile drives the drive device to cause the snowmobile to run, the drive device pushes the vehicle body to cause the vehicle body to move forward, the steering skis glide on the snow surface, and the snowmobile runs forward. The rider steers the handle left or right while the snowmobile is running, whereby the steering skis interlock with the handle via the steering knuckles so that the steering skis are mutually steered in the same direction. Thus, the snowmobile is steered in the desired direction of the rider.

When the steering skis glide on the snow surface, because the areas of the lower surfaces of the runners are small in comparison to those of the ski bodies, the runners are pushed inward from the snow surface, form ruts, fall into the ruts that the runners themselves have made, and move forward. Thus, an external force is applied from the vehicle body so that, even if the steering skis try to fluctuate in the width direction of the vehicle body, a side force is applied to the runners from inner side surfaces of the ruts and the fluctuation is prevented, whereby excellent steering stability of the snowmobile is obtained.

Incidentally, in the above-described conventional technology, when the steering handle is steered to steer the steering skis, there is a tendency for the side force to be applied to the runners and for the force for steering to become heavy. Thus, steering tends to become cumbersome.

Sometimes ruts of steering skis formed so as to curve with a large radius are present due to steering of a preceding snowmobile. In this case, when the snowmobile is made to run on the snow surface, the front portions of the runners of the steering skis fit into the ruts from an almost tangential direction thereof. When this happens, the side force is applied to outer side surfaces of the runners from inner side surfaces of the ruts and the runners are guided along the ruts, whereby there is the potential for the entire steering skis including the runners to fall into the ruts. In this case, the problem arises that intended steering becomes impossible.

Also, as described above, the runners of the steering skis that fall entirely into the ruts receive a larger side force from the inner side surfaces of the ruts. Thus, it becomes uneasy for the runners to escape from the ruts and there is a tendency for the steering skis to glide along the ruts. In this case, the problem arises that intended steering by the rider becomes more impossible.

The present invention was devised in light of the above-described circumstances. Therefore, it is an object of the invention to improve a snowmobile comprising a steering ski system in that steering can be more easily accomplished while excellently maintaining steering stability of a snowmobile.

For a snowmobile of the above kind, this object is solved in an inventive manner in that at least one protrusion projecting downwardly from a lower surface of said ski at a position distanced frontward and/or rearward from the pivot axial center, said protrusion being glidable on a snow surface.

Preferably, a snowmobile comprising a steering ski system is provided including: steering skis that are disposed below a front portion of a vehicle body and extend in a longitudinal direction of the vehicle body; and steering knuckles that project downward from the front portion of the vehicle body, with projecting end portions of the steering knuckles pivotally supporting longitudinal-direction middle portions of the steering skis so that the steering skis are rotatable around a pivot support axial center extending in a width direction of the vehicle body, with each steering ski being disposed with a ski body that is pivotally supported at the steering knuckle and a runner that is disposed at a lower surface of the ski body, the runner being disposed at a width-direction center portion in the lower surface of the ski body and extending in the longitudinal direction of the ski body, and an undersurface of the runner being positioned below the lower surface of the ski body, wherein the snowmobile steering ski system includes protrusions that project downward from a lower end side of portions of the ski bodies distanced frontward or rearward from the pivot support axial center, with lowermost surfaces of projecting end surfaces of the protrusions projecting to substantially the same height as lower surfaces of the runners or further below these lower surfaces, the projecting end surfaces being glidable on a snow surface.

Thus, when the snowmobile runs and the steering skis glide on the snow surface, because the areas of the lower surfaces of the runners are small in comparison to those of the ski bodies, the runners are pushed inward from the snow surface, form ruts, fall into the ruts that the runners themselves have made, and move forward. Thus, an external force is applied from the vehicle body so that, even if the steering skis try to fluctuate in the width direction of the vehicle body, a side force is applied to the runners from inner side surfaces of the ruts and the fluctuation is prevented, whereby excellent steering stability of the snowmobile is obtained.

Moreover, it can thereby be achieved to configure a snowmobile steering ski system so that, when a snowmobile runs on a snow surface in which ruts of steering skis of a preceding snowmobile are present, runners of the steering skis are deterred from falling into the ruts, and it becomes easy for the runners to escape from the ruts even if the steering skis have fallen into the ruts and, consequently, intended steering is easily accomplishable by a rider.

Incidentally, when the steering handle of the snowmobile is steered to steer the steering skies, there is a tendency for the side force to be applied to the runners and for the force for steering to become heavy.

However, because the snowmobile is disposed with the protrusions that project downward from the lower surface sides of the ski bodies, the ski bodies and the runners of the steering skis are pushed up away from the snow surface in accordance with the downward projection of the protrusions when the steering skis and the protrusions glide on the snow surface.

Thus, when the steering skis are steered, the side force applied with respect to the runners is reduced and the force for steering becomes light by the amount that the runners are pushed upward. As a result, steering can be easily accomplished.

Particularly when the protrusions are disposed frontward of the pivot support axial center, firstly, the protrusions glide on the snow surface, whereby the front portions of the runners are more reliably pushed upward because the steering skis are made into a frontward and upward orientation, the side force applied with respect to the runners is more reliably reduced, and the force for steering becomes lighter. As a result, steering can be more easily accomplished.

Secondly, because the front portions of the runners and the protrusions are disposed in a line in the width direction of the steering skis, when the snowmobile runs on the snow surface S in which ruts of steering skis of a preceding snowmobile are present, even if one of the front portions of the runners and the protrusions try to fit into the ruts, the other glides on the snow surface, whereby the fitting into of the one with respect to the ruts is deterred. Even if the steering skis were to fall into the ruts, it becomes easy for the steering skis to escape from the ruts because the steering skis are made into the frontward and upward orientation due to the protrusions as described above.

Thus, even if ruts are present in the snow surface while the snowmobile is running, intended steering can easily be accomplished by the rider.

In case where the protrusions are disposed rearward of the pivot support axial center, when the steering skis glide on the snow surface, the steering skis are caused to be oriented in a straight forward direction by an applied resistance force so that the protrusions face rearward from the snow surface side.

Thus, straightness when the snowmobile moves forward is automatically obtained, and steering stability is improved.

Since, preferably, the protrusions are formed as separate members with respect to the ski bodies and the runners, and the protrusions are attached to at least one of the ski bodies and the runners, the protrusions can be optionally attached to existing snowmobiles and the degree of freedom with which the protrusions can be applied with respect to snowmobiles is improved, which is convenient.

More preferably, each protrusion includes a pair of protruding members disposed at respective outer sides of the runners.

Thus, each protruding member of the protrusions is disposed without compromising the function of the runners while the steering skis are gliding, and the protruding members can be made symmetrical in the width direction of the steering skis using the runners as a reference, whereby straight advancement of the steering skis is secured and steering stability of the snowmobile is excellently retained.

According to an embodiment, when the snowmobile is placed on a level virtual plane in an unloaded state, a lowermost surface of a portion of each steering ski corresponding to the pivot support axial centers in the vertical direction and a lowermost surface of each projecting end surface of the protrusions make contact with the virtual plane.

Thus, when the steering skis are gliding on the snow surface, mainly the portions of the steering skis corresponding to the pivot support axial centers in the vertical direction and the projecting end surfaces of the protrusions strongly make contact with the snow surface and the steering skis are supported on the snow surface.

Additionally, when the steering skis are steered, the lowermost surfaces of the portions of the steering skis corresponding to the pivot support axial centers become rotational centers, and mainly a reaction force is applied to the side surfaces of the protrusions from the snow surface during the steering.

In this case, the protrusions and the front portions or the rear portions of the runners are disposed in a line in the width direction of the steering skis and are prevented from being deeply pushed into the inner portion sides of the snow surface, whereby a large reaction force is prevented from being applied from the snow surface to the side surfaces of the protrusions at the time the steering skis are steered.

Thus, the force for steering the snowmobile can be lightened and, as a result, steering can be easily accomplished.

Preferably, an entire length dimension of each protrusion in the longitudinal direction of the vehicle body is set to 1/4 to 1/2 of a dimension extending from the lowermost surface of the projecting end surface of each protrusion to the pivot support axial centers.

Thus, the entire dimension of each protrusion can be properly determined and excellent steering stability of the snowmobile is obtained. Also, steering of the snowmobile can be easily accomplished and intended steering can be easily accomplished.

When the snowmobile according to a further preferred embodiment is seen from the side, each protrusion is molded in an inverted substantially triangular shape, and an elevation angle when the projecting end surface in a front portion of each protrusion is seen looking towards the front is smaller than an elevation angle when the projecting end surface in a rear portion of each protrusion is seen looking towards the rear.

Thus, when the steering skis glide on the snow surface, the ski bodies and the runners of the steering skis are distanced upward from the snow surface, in correspondence to the fact that the elevation angle of the projecting end surfaces in the front portion of the protrusions is small, so that they are more reliably pushed up.

Thus, the side force applied with respect to the runners is further reduced and the force for steering becomes lighter by the amount that the runners are pushed upward when the steering skis are steered. As a result, steering can be more easily accomplished.

In other words, the area of the side surfaces of the protrusions is kept small by the amount that the elevation angle of the projecting end surface in the rear portion of the protrusion is large in comparison to the elevation angle of the projecting end surfaces in the front portions of the protrusions, and this area is prevented from becoming unnecessarily large.

Thus, when the steering skis are steered, the reaction force from the snow surface with respect to the side surfaces of the protrusions is prevented from becoming unnecessarily large, and the force for steering can be lightened. As a result, steering can be more easily accomplished.

Alternatively, the protrusions of any of the above embodiments may be integrally molded with the ski bodies or the runners.

Thus, even if the protrusions are disposed, an increase in the number of constituent parts of the snowmobile is prevented. Thus, problems such as the making steering easily accomplishable are achieved with a simple configuration.

Further embodiments are subject to the subclaims.

In the following, the invention will be described by means of preferred embodiments together with the drawings thereof, wherein:
- Fig. 1: is a first embodiment and a side view of an entire snowmobile;
- Fig. 2: is the first embodiment and a partially enlarged view of Fig. 1;
- Fig. 3: is the first embodiment and a partially enlarged cross-sectional view of Fig. 2;

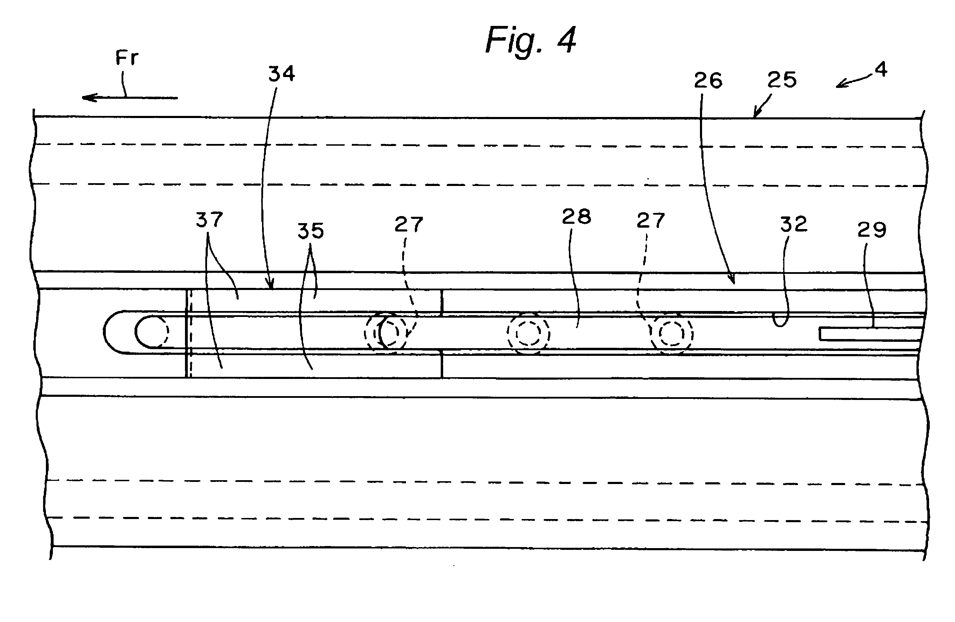

- Fig. 4: is the first embodiment and a bottom view of that which is shown in Fig. 3;

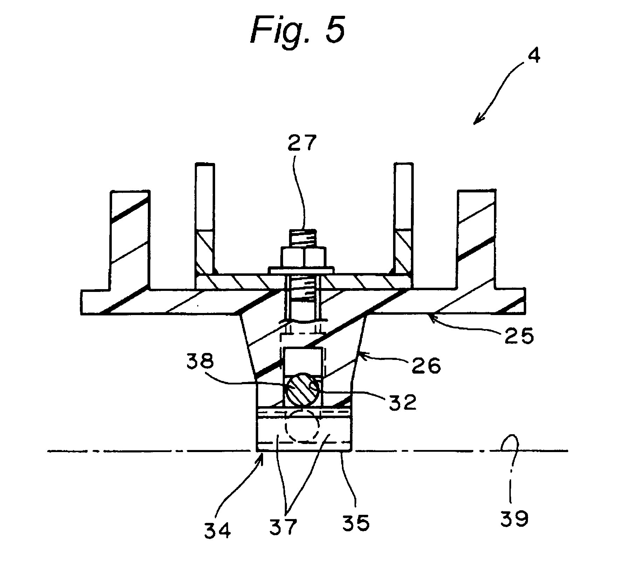

- Fig. 5: is the first embodiment and a cross-sectional view seen from the 5-5 line arrow of Fig. 3;

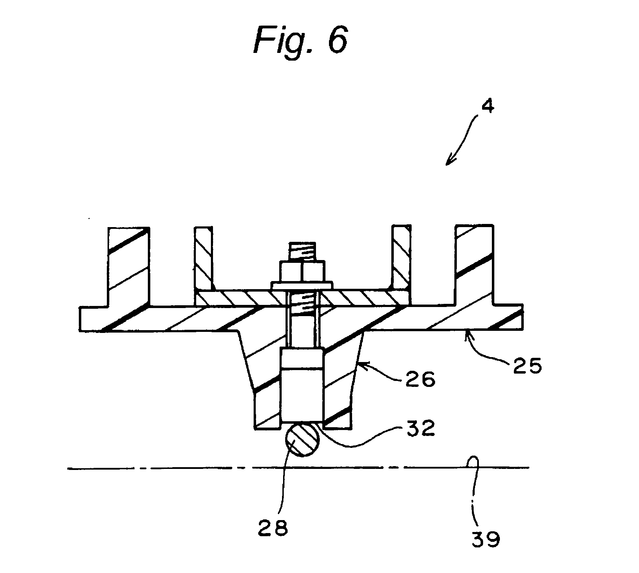

- Fig. 6: is the first embodiment and a cross-sectional view seen from the 6-6 line arrow of Fig. 3;
- Fig. 7: is a second embodiment and a drawing corresponding to Fig. 2;
- Fig. 8: is the second embodiment and a drawing corresponding to Fig. 3;
- Fig. 9: is the second embodiment and a drawing corresponding to Fig. 4; and
- Fig. 10: is the second embodiment and a drawing corresponding to Fig. 5.

Preferred embodiments of the snowmobile comprising a steering ski system are described as follows. Reference numerals added to each term in these sections should not be construed to limit the technical scope of the invention.

In the drawings, reference numeral 1 is a snowmobile that can run on a snow surface S, and arrow Fr in the drawings represents the front of a traveling direction of the snowmobile 1.

The snowmobile 1 is disposed with a vehicle body 2; a drive device 3 that is supported at a rear portion of the vehicle body 2 and causes the vehicle body 2 to be able to be driven forward; a pair of steering skis 4, 4 that are disposed below respective side portions at the front portion of the vehicle body 2 and extend in a longitudinal direction (front-rear direction) of the vehicle body 2; and a pair of suspensions 5, 5 that suspend the steering skis 4 at the front portion of the vehicle body 2.

The snowmobile 1 is disposed with a handle 6 that is supported at the vehicle body 2, projects upward from the vehicle body 2, and is coupled so as to mutually interlock with the respective steering skis 4, 4 via the suspensions 5; a seat 7 that is formed on an upper surface of the vehicle body 2 behind the handle 6 and in which a rider can be seated; and a pair of foot rests 8 that are formed at respective lower side portions of the vehicle body 2 and on which the feet of a rider seated in the seat 7 can be placed. A rider seated in the seat 7 grips the handle 6 to be able to steer.

The drive device 3 is disposed with a driving shaft 12 that is supported at the vehicle body 2 and is caused to drive by an unillustrated engine; a driven shaft 13 that is disposed below a rear portion of the vehicle body 2 and behind and below the driving shaft 12, and is supported at the rear portion of the vehicle body 2; a resilient track belt 14 made of rubber that is wound around the driving shaft 12 and the driven shaft 13; and idlers 15 that are supported at the rear portion of the vehicle body 2 and impart a predetermined tensile force to the track belt 14.

Each suspension 5 is disposed with a support pipe 18 that is supported at the respective side portions of the front portion of the vehicle body 2 and projects frontward and downward from the respective side portions; a steering knuckle 20 that is fitted into and supported at the support pipe 18 so that it is rotatable about an axial center 19 of the support pipe 18; and pivot support shaft 22 that is pivotally supported so that a longitudinal-direction middle portion of the steering ski 4 is rotatable, with respect to a lower end portion of the steering knuckle 20, around a pivot support axial center 21 extending in a width direction of the vehicle body 2. Each steering ski 4 is coupled so as to interlock with the handle 6 via the pivot support shaft 22, the steering knuckle 20, and unillustrated interlocking means.

Each steering ski 4 is disposed with a ski body 25 that is pivotally supported at the steering knuckle 20 via the pivot support shaft 22 and extends in the longitudinal direction of the vehicle body 2; a keel 26 that is integrally formed with a lower surface of the ski body 25; a runner 28 that is detachably attached by fastening by fasteners 27 to a the lower surface of the ski body 25 via the keel 26; a tip 29 made of a hard metal that is attached to a portion of a lower surface of the runner 28 corresponding to the pivot support axial center 21 in the vertical direction; and a handle 30 attached to a front end portion of the ski body 25.

Almost all of the ski body 25 is made of a resin. The lower surface of the middle portion in the longitudinal direction of the ski body 25 flatly extends in the horizontal direction, the lower surface of the front portion of the ski body 25 extends in a shape curving forward and upward, and the lower surface of the rear portion of the ski body 25 extends in a shape curving rearward and upward.

The keel 26 is made of a resin of a material that is the same as that of the ski body 25. The keel 26 is disposed at a width-direction center portion in the lower surface of the ski body 25, extends in the longitudinal direction of the ski body 25, and extends straightly in the longitudinal direction of the steering ski 4 when the snowmobile 1 is seen in plan view. The keel 26 is disposed along almost the entire length of the ski body 25, and the longitudinal-direction cross section of each keel 26 is substantially rectangular. A groove 32, which extends in the longitudinal direction of the keel 26, is formed in a width-direction center portion of the lower surface of the keel 26.

The runners 28 are made of metal rods and disposed in correspondence with the longitudinal-direction middle portions of the ski bodies 25. Each runner 28 is disposed at the width-direction center portion in the lower surface of the ski body 25, extends in the longitudinal direction of the ski body 25, and extends straightly in the longitudinal direction of the steering ski 4 when the snowmobile 1 is seen in plan view. Each runner 28 is fitted into the groove 32 of the keel 26 and attached to the lower surface of the ski body 25 via the keel 26. The longitudinal-direction cross section of each runner 28 is circular and of the same size, and the lower surface of each runner 28 is positioned below the lower surface of the middle portion of the ski body 25 along almost the entire longitudinal direction thereof. A front end portion of the lower surface of each runner 28 is made to gradually approach, in the vertical direction, the lower surface of the keel 26 by gradually curving upward as it advances forward, so that they are eventually of the same height.

A protrusion 34, which is a portion of the ski body 25 forwardly distanced from the pivot support axial center 21 and projects downward from the lower surface side of the front end portion of the middle portion of the ski body 25, is disposed. A lowermost surface of a projecting end surface 35 of the protrusion 34 projects to substantially the same height as the lower surface in the vicinity of the front end portion of the runner 28 or further below this lower surface, and the projecting end surface 35 is glidable on the snow surface S.

The protrusion 34 is made of sheet metal and is a press-molded product. The protrusion 34 is molded as a separate member with respect to the ski body 25, the keel 26 and the runner 28. The protrusion 34 is attached by welding to the runner 28. When the snowmobile 1 is seen in plan view, the substantially entire width dimension of the protrusion 34 is made larger than that of the runner 28. It should be noted that the protrusion 34 may also be molded by casting.

The protrusion 34 is disposed with a pair of protruding members 37, 37 disposed at an outward vicinity of each runner 28, and both the protruding members 37, 37 are mutually and integrally molded. Both protruding members 37 are of the same shape, have the same size, and are symmetrical in the width direction of the steering ski 4 using the runner 28 as a reference.

When the snowmobile 1 is placed on a level virtual plane 39 in an unloaded state, the lowermost surface of the tip 29, which is a portion of the steering ski 4 corresponding to the pivot support axial center 21 in the vertical direction, and the lowermost surface of the projecting end surface 35 of the protrusion 34 make contact with the virtual plane 39 when the snowmobile 1 is seen from the side.

An entire length dimension L1 of the protrusion 34 in the longitudinal direction of the vehicle body 2 is set to 1/4 to 1/2 of a dimension extending from the lowermost surface of the projecting end surface 35 of the protrusion 34 to the pivot support axial center 21 (L1=(1/4 to 1/2)L2).

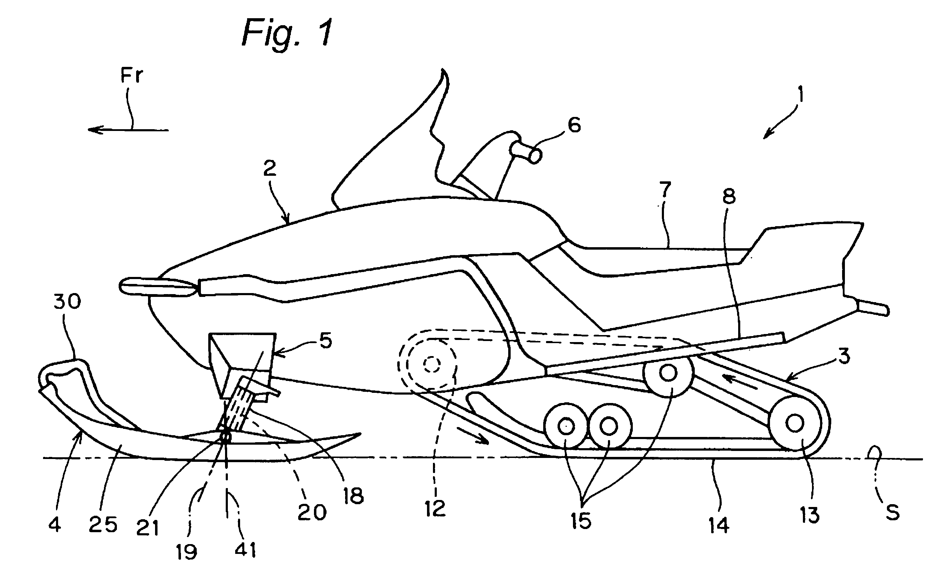

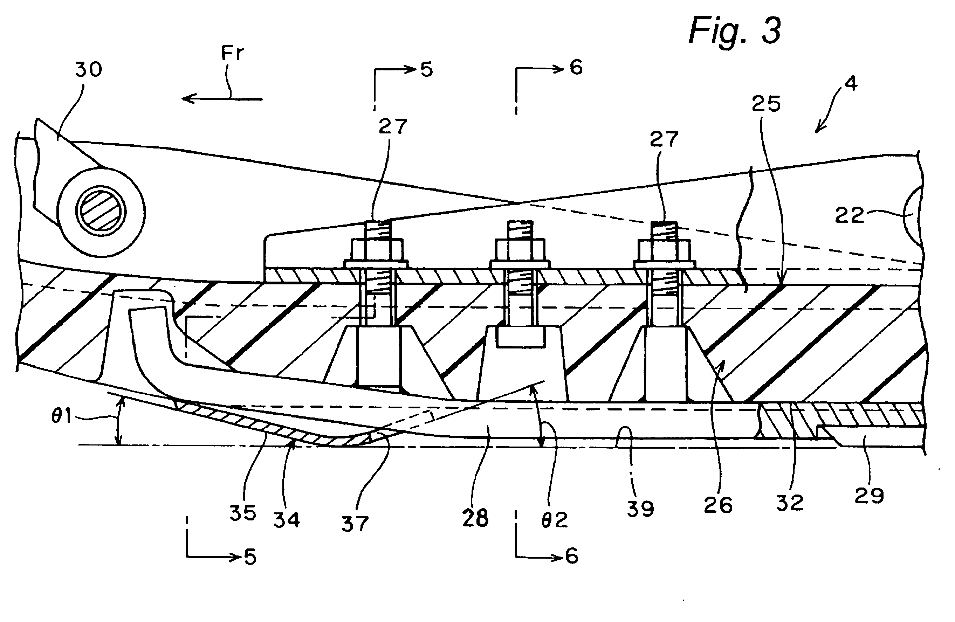

When the snowmobile 1 is seen from the side (Figs. 1 to 3), an outer edge of the protrusion 34 is molded in an inverted substantially triangular shape, and an elevation angle θ1 when the projecting end surface 35 in the front portion of the protrusion 34 is seen looking towards the front is smaller than an elevation angle θ2 when the projecting end surface 35 in the rear portion of the protrusion 34 is seen looking towards the rear (θ1<θ2).

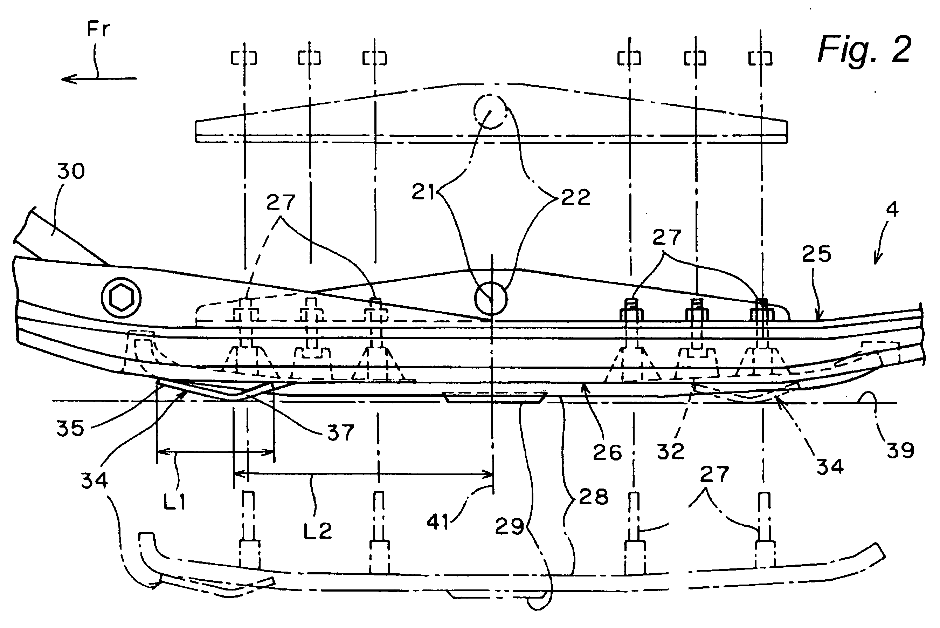

It should be noted that, as shown by the two-dot chain line in Fig. 2, in place of the protrusion 34 or together with the protrusion 34, another protrusion 34 may be made to project from the lower surface of a portion of the ski body 25 distanced rearward from the pivot support axial center 21, and this protrusion 34 may have the same configuration as the protrusion 34.

Although the above depends on the example illustrated, only a single steering ski 4 may be disposed and this steering ski 4 may be disposed below the width-direction center portion of the vehicle body 2. Instead of attaching the protrusion 34 to the runner 28, or together therewith, the protrusion 34 may also be attached by fastening to the ski body 25.

When the snowmobile 1 is disposed on the snow surface S, numerous protrusions molded in the lower surface of the track belt 14, which is the lower surface of the drive device 3, come into contact with the snow surface S, so as to bite into the snow surface S, due to the weight of the vehicle body 2. Each steering ski 4 rotates around the pivot support axial center 21, whereby the entire lower surface of the steering ski 24 contacts the snow surface S so that it can glide on the snow surface S and, in this state, the snowmobile 1 is supported on the snow surface S.

When a rider riding the snowmobile 1 drives the drive device 3 to cause the snowmobile 1 to run, the drive device 3 pushes the vehicle body 2 to cause the vehicle body 2 to move forward, the steering skis 4 glide on the snow surface S, and the snowmobile 1 runs forward. The rider steers the handle 6 left or right while the snowmobile 1 is running, whereby the steering skis 4 interlock with the handle 6 via the steering knuckles 20 so that the steering skis 4 are mutually steered in the same direction. Thus, the snowmobile 1 is steered in the desired direction of the rider.

When the steering skis 4 are steered as described above, the steering skis 4 rotate around the axial centers 19 of the steering knuckles 20 and rotate around the pivot support axial centers 21 of the support axes 22, whereby the steering skis 4 are steered on the snow surface S.

According to the above-described configuration, the protrusion 34, which projects downward from the lower surface of the portion of the ski body 25 distanced frontward or rearward from the pivot support axial center 21, is disposed, the lowermost surface of the projecting end surface 35 of the protrusion 34 projects to substantially the same height as the lower surface of the runner 28 or lower than this lower surface, and the projecting end surface 35 is glidable on the snow surface S.

Thus, when the snowmobile 1 runs and the steering skis 4 glide on the snow surface S, because the areas of the lower surfaces of the runners 28 are small in comparison to those of the ski bodies 25, the runners 28 are pushed inward from the snow surface S, form ruts, fit into the ruts that the runners 28 themselves have made, and move forward. Thus, an external force is applied from the vehicle body 2 so that, even if the steering skis 4 try to fluctuate in the width direction of the vehicle body 2, a side force is applied to the runners 28 from inner side surfaces of the ruts and the fluctuation is prevented, whereby excellent steering stability of the snowmobile 1 is obtained.

Incidentally, when the steering handle 6 of the snowmobile 1 is steered to thereby steer the steering skis 4, the side force is applied to the runners 28, and there is a tendency for the force for steering to become heavy.

However, because the snowmobile 1 is disposed with the protrusions 34 that project downward from the lower surface sides of the ski bodies 25, the ski bodies 25 and the runners 28 of the steering skis 4 are pushed up away from the snow surface S in accordance with the downward projection of the protrusions 34 when the steering skis 4 and the protrusions 34 glide on the snow surface S.

Thus, when the steering skis 4 are steered, the side force applied with respect to the runners 28 is reduced and the force for steering becomes light by the amount that the runners 28 are pushed upward. As a result, steering can be easily accomplished.

Particularly when the protrusions 34 are disposed frontward of the pivot support axial center 21, firstly, the protrusions 34 glide on the snow surface S, whereby the front portions of the runners 28 are more reliably pushed upward because the steering skis 4 are made into a frontward and upward orientation, the side force applied with respect to the runners 28 is more reliably reduced, and the force for steering becomes lighter. As a result, steering can be more easily accomplished.

Secondly, because the front portions of the runners 28 and the protrusions 34 are disposed in a line in the width direction of the steering skis 4, when the snowmobile 1 runs on the snow surface S in which ruts of steering skis of a preceding snowmobile are present, even if one of the front portions of the runners 28 and the protrusions 34 try to fit into the ruts, the other glides on the snow surface S, whereby the fitting into of the one with respect to the ruts is deterred. Even if the steering skis 4 were to fall into the ruts, it becomes easy for the steering skis 4 to escape from the ruts because the steering skis 4 are made into the frontward and upward orientation due to the protrusions 34 as described above.

Thus, even if ruts are present in the snow surface S while the snowmobile 1 is running, intended steering can easily be accomplished by the rider.

In case where the protrusions 34 are disposed rearward of the pivot support axial center 21, when the steering skis 4 glide on the snow surface S, the steering skis 4 are caused to be oriented in a straight forward direction by an applied resistance force so that the protrusions 34 face rearward from the snow surface S side.

Thus, straightness when the snowmobile 1 moves forward is automatically obtained, and steering stability is improved.

Also, as described earlier, the protrusions 34 are molded as separate members with respect to the ski body 25 and the runners 28, and the protrusions 34 are attached to at least one of the ski bodies 25 and the runners 28.

Thus, the protrusions 34 can be optionally attached to existing snowmobiles and the degree of freedom with which the protrusions 34 can be applied with respect to snowmobiles is improved, which is convenient.

Also, as described earlier, each protrusion 34 is disposed with the pair of protruding members 37, 37 disposed at the outer sides of each runner 28.

Thus, each protruding member 37 of the protrusions 34 is disposed without compromising the function of the runners 28 while the steering skis 4 are gliding, and the protruding members 37 can be made symmetrical in the width direction of the steering skis 4 using the runners 28 as a reference, whereby straight advancement of the steering skis 4 is secured and steering stability of the snowmobile 1 is excellently retained.

Also, as described earlier, when the snowmobile 1 is placed on the level virtual plane 39 in an unloaded state, the lowermost surface (the lowermost surfaces of the tips 29) of the portions of the steering skis 4 corresponding to the pivot support axial centers 21 in the vertical direction and the lowermost surfaces of the projecting end surfaces 35 of the protrusions 34 make contact with the virtual plane 39. In this case, the steering skis 4 receive a larger load from the vehicle body 2 of the snowmobile 1 downward on a perpendicular line 41 passing through the pivot support axial centers 21.

Thus, when the steering skis 4 are gliding on the snow surface S, mainly the portions (tips 29) of the steering skis 4 corresponding to the pivot support axial centers 21 in the vertical direction and the projecting end surfaces 35 of the protrusions 34 strongly make contact with the snow surface S and the steering skis 4 are supported on the snow surface S.

Additionally, when the steering skis 4 are steered, the lowermost surfaces of the tips 29, which lowermost surfaces are portions of the steering skis 4 corresponding to the pivot support axial centers 21, become rotational centers, and mainly a reaction force is applied to the side surfaces of the protrusions 34 from the snow surface S during the steering.

In this case, the protrusions 34 and the front portions or the rear portions of the runners 28 are disposed in a line in the width direction of the steering skis 4 and are prevented from being deeply pushed into the inner portion sides of the snow surface S, whereby a large reaction force is prevented from being applied from the snow surface S to the side surfaces of the protrusions 34 at the time the steering skis 4 are steered.

Thus, the force for steering the snowmobile 1 can be lightened and, as a result, steering can be easily accomplished.

Also, as described earlier, the entire length dimension L1 of each protrusion 34 in the longitudinal direction of the vehicle body 2 is 1/4 to 1/2 of the dimension L2 extending from the lowermost surface of each projecting end surface 35 of the protrusions 34 to the pivot support axial centers 21.

Thus, the entire length dimension L1 of each protrusion 34 is optimally determined, and excellent steering stability of the snowmobile 1 is obtained. Also, steering of the snowmobile 1 can be easily accomplished and intended steering can be easily accomplished.

That is, when the entire length dimension L1 of each protrusion 34 is less than 1/4 of the dimension L2, the protrusion 34 becomes too small. Thus, although excellent steerability is obtained by the action of the runners 28, the reduction of the side force applied to the runners 28 becomes insufficient and it becomes necessary to increase the force for steering. Thus, steering of the snowmobile 1 becomes complicated, the steering skis 4 easily enter the ruts, it becomes difficult for the steering skis 4 to escape from the ruts, and intended steering becomes difficult.

When the entire length dimension L1 of each protrusion 34 exceeds 1/2 of the dimension L2, the protrusion 34 becomes too large. Thus, steering stability resulting from the action of the runners 28 is compromised.

Also, as described earlier, when the snowmobile 1 is seen from the side, each protrusion 34 is molded in an inverted substantially triangular shape, and the elevation angle θ1 when the projecting end surface 35 in the front portion of the protrusion 34 is seen looking towards the front is smaller than the elevation angle θ2 when the projecting end surface 35 in the rear portion of the protrusion 34 is seen looking towards the rear.

Thus, when the steering skis 4 glide on the snow surface S, the ski bodies 25 and the runners 28 of the steering skis 4 are distanced upward from the snow surface S, in correspondence to the fact that the elevation angle θ1 of the projecting end surfaces 35 in the front portion of the protrusions 34 is small, so that they are more reliably pushed up.

Thus, the side force applied with respect to the runners 28 is further reduced and the force for steering becomes lighter by the amount that the runners 28 are pushed upward when the steering skis 4 are steered. As a result, steering can be more easily accomplished.

In other words, the area of the side surfaces of the protrusions 34 is kept small by the amount that the elevation angle θ2 of the projecting end surface 35 in the rear portion of the protrusion 34 is large in comparison to the elevation angle θ1 of the projecting end surfaces 35 in the front portions of the protrusions 34, and this area is prevented from becoming unnecessarily large.

Thus, when the steering skis 4 are steered, the reaction force from the snow surface S with respect to the side surfaces of the protrusions 34 is prevented from becoming unnecessarily large, and the force for steering can be lightened. As a result, steering can be more easily accomplished.

Each of the drawings below shows a second embodiment. In this embodiment, there are many points in common with the first embodiment in terms of the configuration, action and effects. Thus, in regard to parts that are shared in common, common reference numerals will be given to the drawings, overlapping description thereof will be omitted, and the different points will be mainly described. Also, in light of the problems, action and effects of the invention, the configurations of respective portions in the embodiments may also be combined.

According to the second embodiment, the protruding members 37 of the protrusions 34 are integrally molded with the side portions of the keels 26. In other words, the protruding members 37 of the protrusions 34 are integrally molded with the ski bodies 25 via the keels 26. Also, the protruding members 37 are disposed only at the outer sides of the runners 28.

It should be noted that the protrusions 34 may also be integrally formed with the runners 28.

According to the above-described configuration, even if the protrusions 34 are disposed, an increase in the number of constituent parts of the snowmobile 1 is prevented. Thus, problems such as the making steering easily accomplishable are achieved with a simple configuration.

As exemplified in all of the drawings and as described before, a snowmobile comprising a steering ski system includes steering skis 4 that are disposed below a front portion of a vehicle body 2 and extend in a longitudinal direction of the vehicle body 2; and steering knuckles 20 that project downward from the front portion of the vehicle body 2, with projecting end portions of the steering knuckles 20 pivotally supporting longitudinal-direction middle portions of the steering skis 4 so that the steering skis 4 are rotatable around a pivot support axial center 21 extending in a width direction of the vehicle body 2, with each steering ski 4 being disposed with a ski body 25 that is pivotally supported at the steering knuckle 20 and a runner 28 that is disposed at a lower surface of the ski body 25, the runner 28 being disposed at a width-direction center portion in the lower surface of the ski body 25 and extending in the longitudinal direction of the ski body 25, and an undersurface of the runner 28 being positioned below the lower surface of the ski body 25, wherein the snowmobile steering ski system includes protrusions 34 that project downward from a lower end side of portions of the ski bodies 25 distanced frontward or rearward from the pivot support axial center 21, with lowermost surfaces of projecting end surfaces 35 of the protrusions 34 projecting to substantially the same height as lower surfaces of the runners 28 or further below these lower surfaces, the projecting end surfaces 35 being glidable on a snow surface S.

As exemplified in all of the drawings, in the snowmobile steering ski system the protrusions 34 are formed as separate members with respect to the ski bodies 25 and the runners 28, and the protrusions 34 are attached to at least one of the ski bodies 25 and the runners 28.

Moreover, each protrusion 34 includes a pair of protruding members 37, 37 disposed at respective outer sides of the runners 28.

As exemplified in all of the drawings, when the snowmobile 1 is placed on a level virtual plane 39 in an unloaded state, a lowermost surface of a portion of each steering ski 4 corresponding to the pivot support axial centers 21 in the vertical direction and a lowermost surface of each projecting end surface 35 of the protrusions 34 make contact with the virtual plane 39.

As further exemplified in all of the drawings, an entire length dimension L1 of each protrusion 34 in the longitudinal direction of the vehicle body 2 is set to 1/4 to 1/2 of a dimension L2 extending from the lowermost surface of the projecting end surface 35 of each protrusion 34 to the pivot support axial centers 21 (L1=(1/4 to 1/2)L2).

Additionally exemplified in all of the drawings, when the snowmobile 1 is seen from the side, each protrusion 34 is formed in an inverted substantially triangular shape, and an elevation angle θ1 when the projecting end surface 35 in a front portion of each protrusion 34 is seen looking towards the front is smaller than an elevation angle θ2 when the projecting end surface 35 in a rear portion of each protrusion 34 is seen looking towards the rear (θ1<θ2).

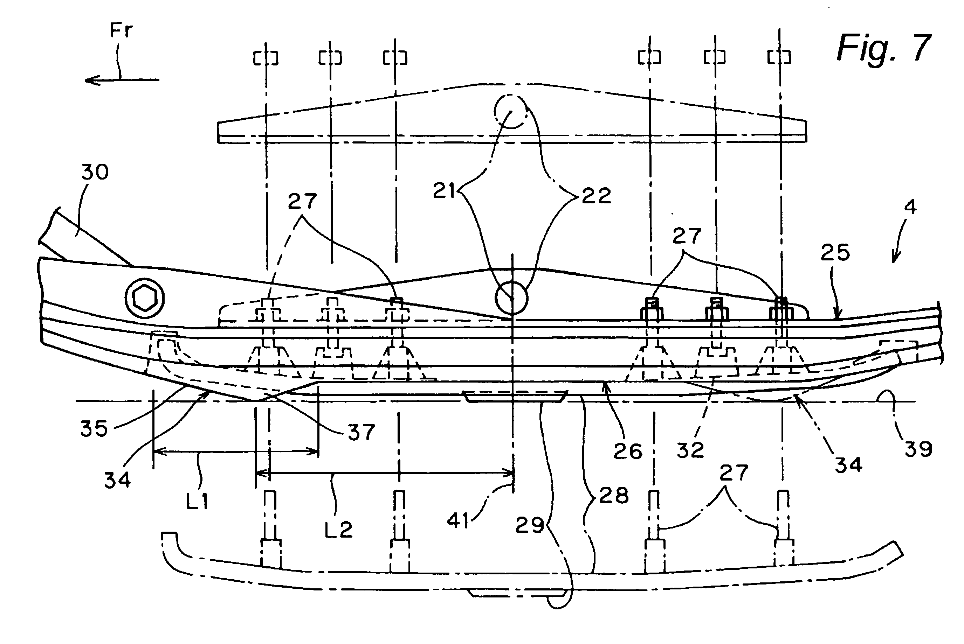

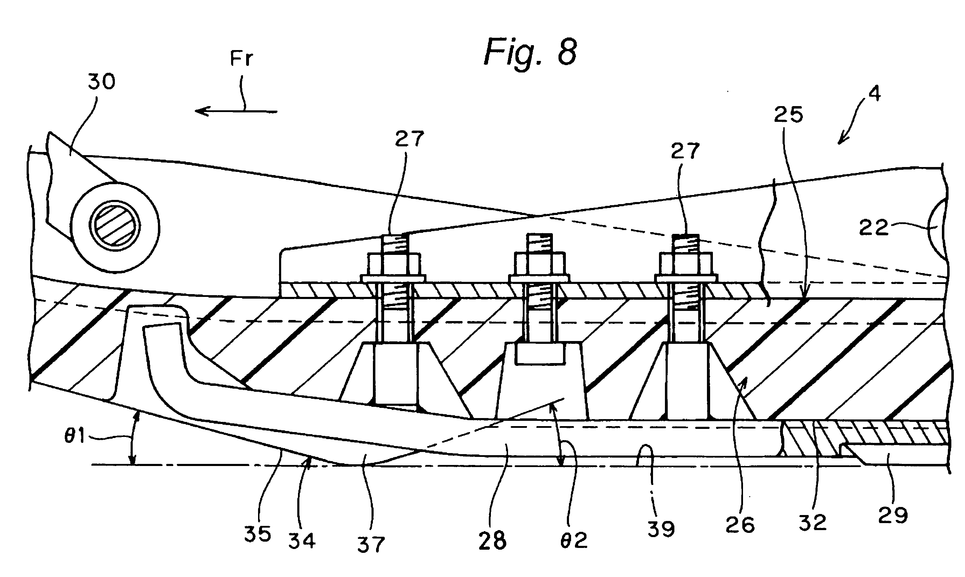

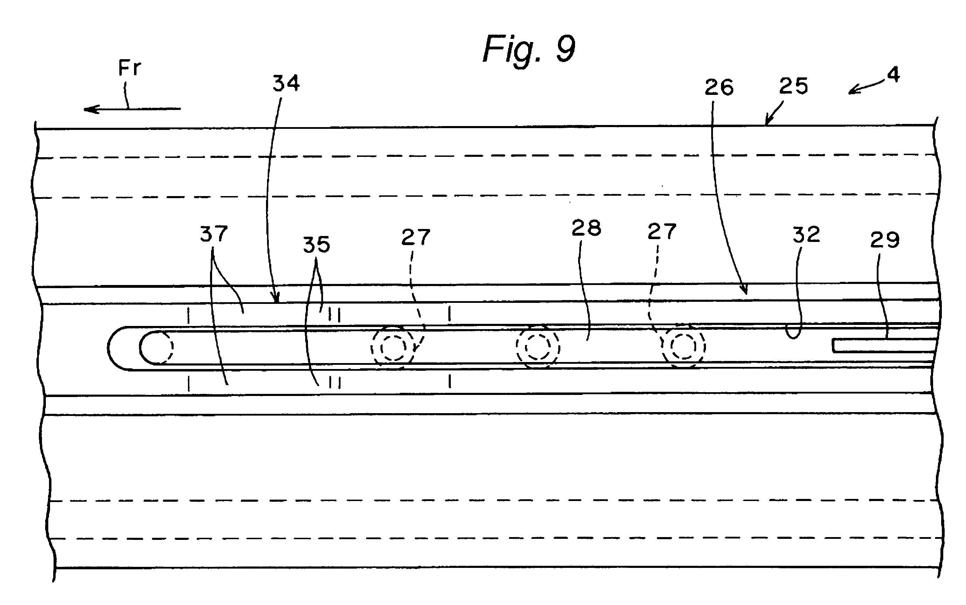

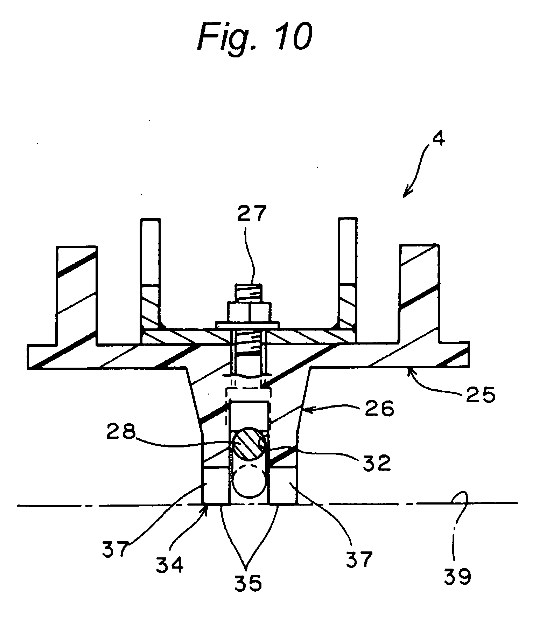

Moreover, as exemplified in Figs. 7 to 10, in the snowmobile steering ski system the protrusions 34 may be integrally molded with the ski bodies 25 or the runners 28.

To make steering easily accomplishable while excellently maintaining steering stability of a snowmobile, a snowmobile 1 is proposed being disposed with steering skis 4 that extend in a longitudinal direction of a vehicle body 2 and steering knuckles 20 that project downward from a front portion of the vehicle body 2, with projecting end portions of the steering knuckles 20 pivotally supporting the steering skis 4 so that the steering skis 4 are rotatable around pivot support axial centers 21 extending in a width direction of the vehicle body 2. Each steering ski 4 is disposed with a ski body 25 that is supported at the steering knuckle 20 and a runner 28 that is disposed at a width-direction center portion in a lower surface of the ski body 25 and extends in the longitudinal direction of the ski body 25. A protrusion 34, which projects downward from a lower end side of portions of each ski body 25 distanced frontward or rearward from the pivot support axial center 21, is disposed, a lowermost surface of a projecting end surface 35 of the protrusion 34 projects to substantially the same height as lower surfaces of the runners 28 or further below these lower surfaces, and the projecting end surface 35 is glidable on a snow surface S.

## Claims

1. Snowmobile comprising a steering ski system including at least one steering ski (4) being disposed below a front portion of a vehicle body (2) rotatable about a pivot support axial center (21), **characterized by**
at least one protrusion (34) projecting downwardly from a lower surface of said ski (4) at a position distanced frontward and/or rearward from the pivot axial center (21), said protrusion (34) being glidable on a snow surface (S).

2. Snowmobile according to claim 1, **characterized in that** said ski comprises a ski body (25) and/or a runner (28) located at a lower surface and extending in the longitudinal direction of the ski body.

3. Snowmobile according to claim 2, **characterized in that** said at least one protrusion projects downwardly from a lower end side of a portion of the ski body (25).

4. Snowmobile according to claim 3, **characterized in that** a lowermost surface of a projecting end surface (35) of the protrusion (34) projects to substantially the same height as lower surfaces of the runners (28) or further below these lower surfaces.

5. Snowmobile according to at least one of the claims 1 to 4, **characterized in that** said protrusion is adjustable in height with respect to said lower surfaces.

6. Snowmobile according to at least one of the claims 2 to 5, **characterized in that** the protrusion (34) is formed as a separate member with respect to the ski body (25) and the runner (28).

7. Snowmobile according to at least one of the claims 2 to 6, **characterized in that** the protrusion (34) is attached to the ski body (25) and/or the runner (28).

8. Snowmobile according to at least one of the claims 1 to 7, **characterized in that** each protrusion (34) includes a pair of protruding members (37,37) preferably disposed at respective outer sides of the runner (28).

9. Snowmobile according to at least one of the claims 1 to 8, **characterized in that** when the snowmobile (1) is placed on a level virtual plane (39) in an unloaded state, a lowermost surface of a portion of each steering ski (4) corresponding to the pivot support axial centers (21) in the vertical direction and a lowermost surface of each projecting end surface (35) of the protrusions (34) make contact with the virtual plane (39).

10. Snowmobile according to at least one of the claims 1 to 9, **characterized in that** an entire length dimension (L1) of each protrusion (34) in the longitudinal direction of the vehicle body (2) is set to 1/4 to 1/2 of a dimension (L2) extending from the lowermost surface of the projecting end surface (35) of each protrusion (34) to the pivot support axial centers (21).

11. Snowmobile according to at least one of the claims 1 to 10, **characterized in that** when the snowmobile (1) is seen from the side, each protrusion (34) is formed in an inverted substantially triangular shape.

12. Snowmobile according to claim 11, **characterized in that** a first elevation angle (θ1) when the projecting end surface (35) in a front portion of each protrusion (34) is seen looking towards the front is smaller than a second elevation angle (θ2) when the projecting end surface (35) in a rear portion of each protrusion (34) is seen looking toward the rear.

13. Snowmobile according to at least one of the claims 2 to 12, **characterized in that** the protrusions (34) are integrally formed with the ski body (25) and/or the runner (28).

14. Snowmobile according to at least one of the claims 1 to 13, **characterized in that** steering knuckles (20) project downward from the front portion of the vehicle body (2) with projecting end portions of the steering knuckles (20) pivotally supporting longitudinal-direction middle portions of the preferably two steering skis (4) which extend in a longitudinal direction of the vehicle body (2).

15. Snowmobile according to at least one of the claims 2 to 14, **characterized in that** the runner (28) is disposed at a width-direction center portion in the lower surface of the ski body (25) and an undersurface of the runner (28) is positioned below the lower surface of the ski body (25).
